# EUROPEAN PATENT APPLICATION

(11) **EP 4 325 383 A1**
(43) Date of publication of application: **21.02.2024**
(21) Application number: 23189143.3
(22) Date of filing: 02.08.2023
(51) Int. Cl.: G06F 21/32, H04L 9/40

(54) **TECHNIQUES TO PROVIDE USER AUTHENTICATION FOR A NEAR-EYE DISPLAY DEVICE**

(30) Priority: 16.08.2022 US 202263398415 P; 24.02.2023 US 202318113919
(71) Applicant: Meta Platforms Technologies, LLC, Menlo Park, CA 94025 (US)
(72) Inventor: WANG, Nan, Menlo Park, 94025 (US); WANG, Bruce, Menlo Park, 94025 (US); CHEN, Zhongming, Menlo Park, 94025 (US); TAO, David, Menlo Park, 94025 (US); HOBEIKA, Hind, Menlo Park, 94025 (US)
(74) Representative: Murgitroyd & Company

(57) **Abstract**

User biometric information based authentication techniques are provided for a wearer of a near-eye display device in engagement with multimedia content and/or access to restricted data. Biological and/or behavioral biometric information associated with the user may be captured through sensors and similar devices integrated or communicatively coupled to the near-eye display device. The biological biometric information may include data associated with a user's face, fingerprint, palmprint, iris, retina, cardio-electrical signals, etc. The behavioral biometric information may include data associated with a user's movement, gait, gesture(s), voice, etc. An authentication technique may be automatically select one based on environmental conditions (e.g., noise or light levels). Near-eye display device may detect continuous wearing by the user and refresh or continue authentication following a period of non-use or between two different authenticated sessions.

## Description

### TECHNICAL FIELD

This patent application relates generally to near-eye display devices with augmented reality (AR) / virtual reality (VR) functionality, and specifically, to techniques for authenticating a user of a near-eye display device for secure content delivery, data exchange, and/or communication via the near-eye display device.

### BACKGROUND

With recent advances in technology, prevalence and proliferation of content creation and delivery has increased greatly in recent years. In particular, interactive content such as virtual reality (VR) content, augmented reality (AR) content, mixed reality (MR) content, and content within and associated with a real and/or virtual environment (e.g., a "metaverse") has become appealing to consumers.

In addition to delivery of content, a near-eye display device such as a head-mounted display (HMD) may be used to facilitate audio/video communications, accessing network-stored data (e.g., viewing files), or comparable data exchange sessions similar to a portable computing device.

### SUMMARY

According to a first aspect, there is provided a near-eye display device, comprising: a display element to present a digital content to a user; at least one sensor to receive biometric information associated with the user; and a controller communicatively coupled to the display element and the at least one sensor, the controller configured to authenticate the user for an access-restricted activity based at least in part on an evaluation of the received biometric information or a user action.

The access-restricted activity may comprise an engagement with multimedia content or restricted data.

The near-eye display device may further comprise: at least one additional sensor to detect whether the near-eye display device is continuously worn by the user between a first access-restricted activity and a second access-restricted activity. The user action may be continuous wearing of the near-eye display device by the user.

The controller may be further configured to: renew the authentication for the second access-restricted activity in the event the near-eye display device is continuously worn by the user or reworn by the user within a predetermined time period.

The near-eye display device may further comprise: at least one additional sensor to detect one of an environmental condition or a user condition. The controller may be further configured to: determine, based on an input from the at least one additional sensor, that the environmental condition or the user condition is incompatible with a first authentication technique; and make available a second authentication technique.

The biometric information associated with the user may comprise at least one of a biological biometric information or behavioral biometric information.

The biological biometric information may comprise data associated with a face, a fingerprint, a palmprint, an iris, a retina, or an electrocardiogram (ECG) signal of the user. The near-eye display device may further comprise a camera to capture an image of a finger of the user or a capacitive sensor to scan the finger of the user.

The behavioral biometric information may comprise data associated with a movement, a gesture, a voice, or a gait of the user.

The near-eye display device may further comprise at least one of: a motion detector to detect the gait of the user; a touchpad integrated with the near-eye display device to receive a passcode from the user; a microphone to capture the voice of the user; a camera to capture a sequence of finger gestures; or a muscle electrical signal detector to detect muscle electrical signals from a wrist of the user and to determine a sequence of finger gestures based on the detected muscle electrical signals.

According to a second aspect, there is provided a method, comprising: presenting, through a display element of a near-eye display device, a digital content to a user; receiving, through at least one sensor of the near-eye display device, biometric information associated with the user; and authenticating, through a controller of the near-eye display device, the user for an access-restricted activity based at least in part on an evaluation of the received biometric information or a user action.

Presenting the digital content may comprise: enabling an engagement with multimedia content or restricted data.

The method may further comprise: detecting whether the near-eye display device is continuously worn by the user between a first access-restricted activity and a second access-restricted activity, wherein the user action is continuous wearing of the near-eye display device by the user.

The method may further comprise: renewing the authentication for the second access-restricted activity in the event the near-eye display device is continuously worn by the user or reworn by the user within a predetermined time period.

The method may further comprise: detecting an environmental condition or a user condition; determining that the environmental condition or the user condition is incompatible with a first authentication technique; and making available a second authentication technique.

The biometric information associated with the user may comprise at least one of a biological biometric information or behavioral biometric information. The behavioral biometric information may comprise data associated with a movement, a gesture, a voice, or a gait of the user.

According to a third aspect, there is provided a non-transitory computer-readable storage medium having an executable stored thereon, which when executed by the controller of the near-eye display device of the first aspect, causes the controller to carry out the method of the second aspect.

According to a fourth aspect, there is provided a computer program product comprising instructions which, when executed by the controller of the near-eye display device of the first aspect, causes the controller to carry out the method of the second aspect.

### BRIEF DESCRIPTION OF DRAWINGS

Features of the present disclosure are illustrated by way of example and not limited in the following figures, in which like numerals indicate like elements. One skilled in the art will readily recognize from the following that alternative examples of the structures and methods illustrated in the figures can be employed without departing from the principles described herein.
Figure 1 illustrates a perspective view of a near-eye display device in form of a pair of augmented reality (AR) glasses, according to an example.
Figure 2A illustrates a perspective view of a near-eye display device that may be used to authenticate a user through fingerprint detection, according to an example.
Figure 2B illustrates a perspective view of a near-eye display device that may be used to authenticate a user through gesture detection, according to an example.
Figure 2C illustrates a perspective view of a near-eye display device that may be used to authenticate a user through voice recognition, according to an example.
Figure 2D illustrates a perspective view of a near-eye display device that may be used to authenticate a user through iris scanning, according to an example.
Figure 2E illustrates a perspective view of a near-eye display device that may be used to authenticate a user through cardio-electrical signal detection, according to an example.
Figure 2F illustrates a perspective view of a near-eye display device that may be used to authenticate a user through palmprint detection, according to an example.
Figure 2G illustrates a perspective view of a near-eye display device that may be used to authenticate a user through passcode entry, according to an example.
Figure 2H illustrates a perspective view of a near-eye display device with one or more sensors to detect continuous wearing of the near-eye display device, according to an example.
Figure 3 illustrates a flowchart of a method for authenticating a user of a near-eye display device for secure data exchange or communication via the near-eye display device, according to an example.

### DETAILED DESCRIPTION

For simplicity and illustrative purposes, the present application is described by referring mainly to examples thereof. In the following description, numerous specific details are set forth in order to provide a thorough understanding of the present application. It will be readily apparent, however, that the present application may be practiced without limitation to these specific details. In other instances, some methods and structures readily understood by one of ordinary skill in the art have not been described in detail so as not to unnecessarily obscure the present application. As used herein, the terms "a" and "an" are intended to denote at least one of a particular element, the term "includes" means includes but not limited to, the term "including" means including but not limited to, and the term "based on" means based at least in part on.

As used herein, a "near-eye display device" may refer to any display device (e.g., an optical device) that may be in close proximity to a user's eye. As used herein, "artificial reality" may refer to aspects of, among other things, a "metaverse" or an environment of real and virtual elements and may include use of technologies associated with virtual reality (VR), augmented reality (AR), and/or mixed reality (MR). As used herein, a "user" may refer to a user or wearer of a "near-eye display device."

Near-eye display devices may provide digital content (real-life and/or artificial images and video) from a variety of sources such as local data storage, networked streaming sources, and others. Furthermore, near-eye display devices may also be used for communications such as video conferences, multi-party games, multi-party video viewing, etc. Without any security measures, any wearer of a near-eye display device may have access to content or communication session available through that near-eye display device.

In some examples of the present disclosure, various user biometric information based authentication techniques may be provided for a wearer of a near-eye display device. The near-eye display device may be used for engagement in multimedia content (provided to streaming or comparable delivery techniques) and/or access to restricted data. For example, restricted access content such as images, streamed video, and similar ones may be presented to the user; the user may participate in communication sessions (e.g., meetings), multi-party games, and comparable data exchanges through the near-eye display device; and access file directories, data stores, view documents, banking information, etc. For any of these functionalities and similar ones, a user, that is a current wearer of the near-eye display device, may be authenticated for access to a particular functionality.

Example authentication techniques may include, but are not limited to, capturing or obtaining biological biometric information and/or behavioral biometric information associated with the user through sensors and similar devices integrated or communicatively coupled to the near-eye display device. The biological biometric information may include data associated with a user's face, fingerprint, palmprint, iris, retina, cardio-electrical signals, etc. The behavioral biometric information may include data associated with a user's movement, gait, gesture(s), voice, etc. In some examples, the near-eye display device may provide a selection among multiple authentication techniques or automatically select one based on, for example, environmental conditions (e.g., noise or light levels). In other examples, the near-eye display device may detect continuous wearing by the user and refresh or continue authentication following a period of non-use or between two different authenticated sessions. In some examples, an on-device camera may capture a code (such as QR code) on another device (mobile phone, computer, etc.) that is capable of performing authentication through other means.

While some advantages and benefits of the present disclosure are apparent, other advantages and benefits may include providing data and user identity security, ease of authentication (without a need for a separate computing device), transitioning between two distinct authenticated sessions, and similar ones.

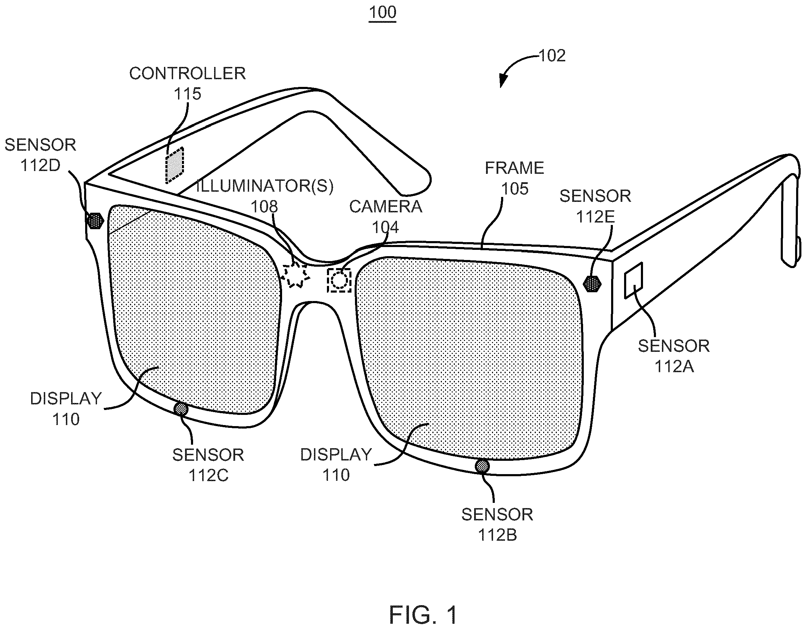

Figure 1 is a perspective view of a near-eye display device 102 in the form of a pair of glasses (or other similar eyewear), according to an example. In some examples, the near-eye display device 102 may be configured to operate as a virtual reality display, an augmented reality (AR) display, and/or a mixed reality (MR) display.

As shown in diagram 100, the near-eye display device 102 may include a frame 105 and a display 110. In some examples, the display 110 may be configured to present media or other content to a user. In some examples, the display 110 may include display electronics and/or display optics. For example, the display 110 may include a liquid crystal display (LCD) display panel, a light-emitting diode (LED) display panel, or an optical display panel (e.g., a waveguide display assembly). In some examples, the display 110 may also include any number of optical components, such as waveguides, gratings, lenses, mirrors, etc. In other examples, the display 110 may include a projector, or in place of the display 110 the near-eye display device 102 may include a projector. The projector may use laser light to form an image in angular domain on an eye box for direct observation by a viewer's eye and may include a vertical cavity surface emitting laser (VCSEL) emitting light at an off-normal angle integrated with a photonic integrated circuit (PIC) for high efficiency and reduced power consumption.

In some examples, the near-eye display device 102 may further include various sensors 112A, 112B, 112C, 112D, and 112E on or within a frame 105. In some examples, the various sensors 112A-112E may include any number of depth sensors, motion sensors, position sensors, inertial sensors, and/or ambient light sensors, as shown. In some examples, the various sensors 112A-112E may include any number of image sensors configured to generate image data representing different fields of views in one or more different directions. In some examples, the various sensors 112A-112E may be used as input devices to control or influence the displayed content of the near-eye display device, and/or to provide an interactive virtual reality (VR), augmented reality (AR), and/or mixed reality (MR) experience to a user of the near-eye display device 102. In some examples, the various sensors 112A-112E may also be used for stereoscopic imaging or other similar application.

In some examples, the near-eye display device 102 may further include one or more illuminators 108 to project light into a physical environment. The projected light may be associated with different frequency bands (e.g., visible light, infra-red light, ultra-violet light, etc.), and may serve various purposes. In some examples, the one or more illuminator(s) 108 may be used as locators.

In some examples, the near-eye display device 102 may also include a camera 104 or other image capture unit. The camera 104, for instance, may capture images of the physical environment in the field of view. In some instances, the captured images may be processed, for example, by a virtual reality engine to add virtual objects to the captured images or modify physical objects in the captured images, and the processed images may be displayed to the user by the display 110 for augmented reality (AR) and/or mixed reality (MR) applications.

In some examples, the near-eye display device 102 may include a local controller 115. The local controller 115 may manage operations of electronic components and circuits on the near-eye display device 102 such as the display 110, the camera 104, the illuminators 108, and/or the sensors 112A-112E. For example, the controller 115 may perform part or all of the authentication operations associated with the various authentication techniques discussed herein. In other examples, operations of electronic components and circuits on the near-eye display device 102 may be managed by a remote controller (not shown) communicatively coupled to the near-eye display device 102. In further examples, the remote controller and the local controller 115 may operate together each performing some of the processes and tasks. The remote controller and the local controller 115 may be implemented as discrete or distributed processors, graphical processing units (GPUs), digital signal processing (DSP) units, or similar circuits.

Functions described herein may be distributed among components of the near-eye display device 102 in a different manner than is described here. Furthermore, a near-eye display device as discussed herein may be implemented with additional or fewer components than shown in Figure 1. While the near-eye display device 102 is shown and described in form of glasses, user authentication may be implemented in other forms of near-eye display devices or head-mount display (HMD) devices such as goggles, headsets, and comparable devices. Furthermore, user authentication may be implemented in other types of wearable devices such as a smart watch, a smart armband, non-display wearables (e.g., game controller), and comparable ones.

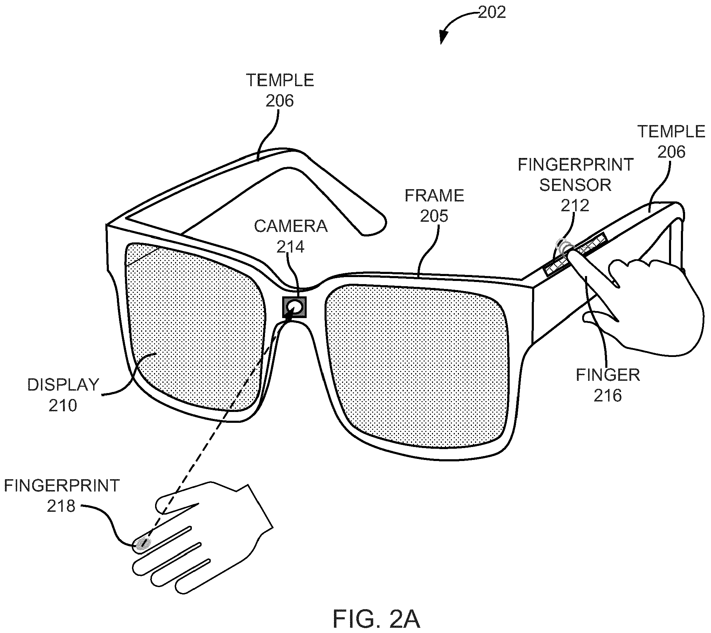

Figure 2A illustrates a perspective view of a near-eye display device 202 that may be used to authenticate a user through fingerprint detection, according to an example. The near-eye display device 202 may include some or all of the components of the near-eye display device 102 in Figure 1 for performing functions associated with presenting content to a user, for example augmented reality (AR), virtual reality (VR), and/or other content. As mentioned herein, the user (current wearer of the near-eye display device 202) may be authenticated for a secure communication and/or data exchange session. In one example implementation of the authentication functionality, an outward-facing camera 214 on the frame 205 may be used to capture a fingerprint 218 of the user. A controller (not shown) may then compare the captured fingerprint 218 to a stored fingerprint of the user and authenticate the user if the fingerprints match.

In some examples, fingerprint authentication may alternatively be performed by a fingerprint sensor 212 positioned on a temple 206 of the near-eye display device 202. The fingerprint sensor 212 may be on a side surface, a top surface, and/or a bottom surface of the temple 206, among other locations. The fingerprint sensor 212 may, for example, be high density capacitive sensor that can detect the fingerprint when the user swipes or rests their finger 216 across the fingerprint sensor 212. Display 210 may be used to provide instructions to the user such as telling them to place their finger in front of the camera 214 or swipe their finger across the fingerprint sensor 212. If the fingerprint is not successfully detected, a repeat request may also be provided to the user through the display and/or via audio cue.

Any images (e.g., fingerprint) or sensor captured information, as well as, authentication results may or may not be stored at the near-eye display device 102 and/or any other external system (e.g., an authentication server, a content server, etc.) based on user preference. For personal information protection and privacy purposes, a default setting may be not storing the information, which may be modified by the user at any point.

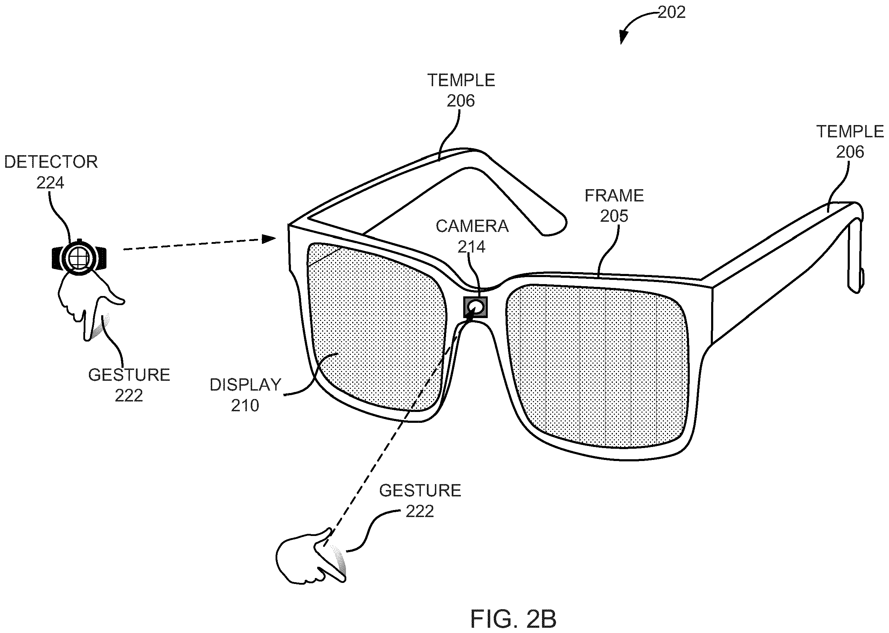

Figure 2B illustrates a perspective view of a near-eye display device that may be used to authenticate a user through gesture detection, according to an example. As with the example above, the near-eye display device 202 may include some or all of the components of the near-eye display device 102 in Figure 1 for performing functions associated with presenting content to a user, for example augmented reality (AR), virtual reality (VR), and/or other content. In another example implementation of the authentication functionality, the camera 214 on the frame 205 or similar image capture device or a separate detector 224 may be used to capture a sequence of finger gestures by the user. A controller (not shown) may then analyze the captured sequence of gestures and authenticate the user based on gesture recognition.

In some examples, a user may customize special finger gestures, for example, a sequence of distinct finger positions, a combination of which may be used to authenticate the user. The gestures may be detected by the camera 214 or by the detector 224. The detector 224 may be a wrist-worn device capable of detecting muscle electrical signals to interpret the signals as corresponding to specific finger positions or combinations of finger positions. The detector 224 may be communicatively coupled to the near-eye display device 202 via wireless means such as wireless local area network (WLAN) communication, short distance communication (e.g., Bluetooth), or near field communication (NFC).

In some examples input from the camera 214 and the detector 224 may be combined for strong(er) authentication or more reliable interpretation results. Illustrative examples of gesture combinations may include, but are not limited to, two index finger pinches followed by two middle finger pinches or swiping up followed by swiping left. The display 210 may present instructions to the user. For example, the display 210 may instruct the user to place their hand in front of the camera 214 or to activate the detector 224. Instructions may also be provided via audio cue. The detector 224 may be a smartwatch, a game glove, or similar wrist- or hand-worn device. In other examples, the near-eye display device may include one or more motion detectors to detect a gait of the user, which may be used to authenticate the user.

Any images (e.g., gesture) or sensor captured information (e.g., muscle electrical signals), as well as, authentication results may or may not be stored at the near-eye display device 102 and/or any other external system (e.g., an authentication server, a content server, etc.) based on user preference. For personal information protection and privacy purposes, a default setting may be not storing the information, which may be modified by the user at any point.

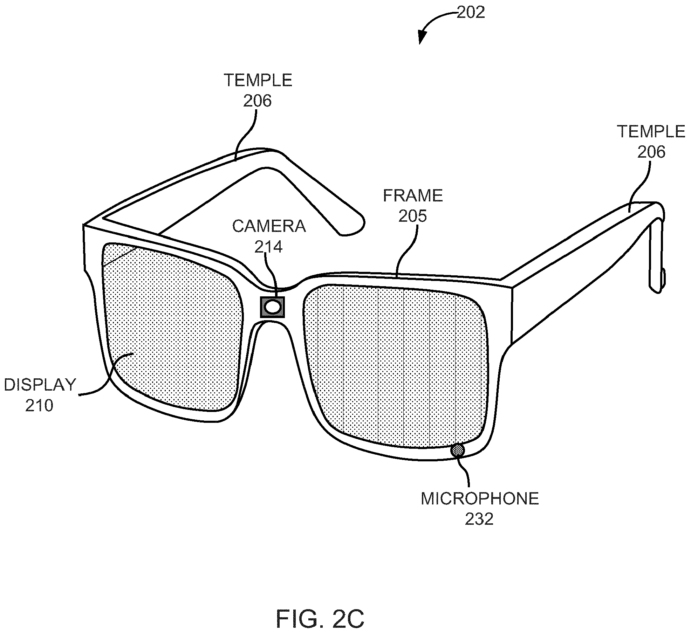

Figure 2C illustrates a perspective view of a near-eye display device that may be used to authenticate a user through voice recognition, according to an example. As with the examples above, the near-eye display device 202 may include some or all of the components of the near-eye display device 102 in Figure 1 for performing functions associated with presenting content to a user, for example augmented reality (AR), virtual reality (VR), and/or other content. In another example implementation of the authentication functionality, a microphone 232 on the frame 205 or similar sound capture device may be used to capture a voice of the user. A controller (not shown) may then compare the captured voice to a stored voice of the user or use other voice recognition techniques and authenticate the user based on the voice recognition.

In some examples, the display 210 may present instructions to the user. For example, the display 210 may present a number of predetermined words and instruct the user to speak the words out loud for voice recognition. Instructions may also be provided via audio cue. In other examples, any speech or utterance by the user may be used to detect voice patterns and authenticate the user. Voice biometrics identifies specific speakers based on distinguishing characteristics of each person's voice determined by their anatomy and behavioral speech patterns. The shape and size of their mouths and throats, as well as their language, pitch and speaking patterns (e.g., fast-talking versus slow-talking) shape a person's voice and may be used as identifying characteristics. A voice recognition engine (e.g., executed by a local or remote controller) may map the user's unique characteristics and then use the map for later identification.

Any data (e.g., captured voice) or identified biometric information therefrom, as well as, authentication results may or may not be stored at the near-eye display device 102 and/or any other external system (e.g., an authentication server, a content server, etc.) based on user preference. For personal information protection and privacy purposes, a default setting may be not storing the information, which may be modified by the user at any point.

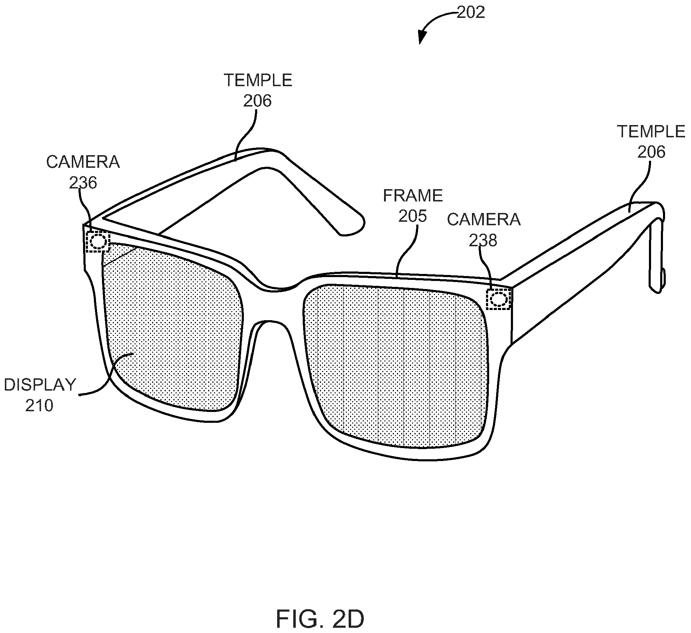

Figure 2D illustrates a perspective view of a near-eye display device that may be used to authenticate a user through iris scanning, according to an example. As with the examples above, the near-eye display device 202 may include some or all of the components of the near-eye display device 102 in Figure 1 for performing functions associated with presenting content to a user, for example augmented reality (AR), virtual reality (VR), and/or other content. In another example implementation of the authentication functionality, inward-facing camera 236 and/or inward-facing camera 238 on the frame 205 or similar image capture device(s) may be used to capture an image of one or both irises of the user. A controller (not shown) may then compare the captured image or identified biometric information to stored information associated with the user and authenticate the user based on the iris recognition.

The iris is the colored, donut-shaped portion of the eye behind the cornea and surrounds the pupil. A person's iris pattern is unique and remains unchanged throughout life. Also, covered by the cornea, the iris is well protected from damage, making it a suitable body part for biometric authentication. Because the iris is different between the left and right eye, recognition may be performed separately by each eye allowing a selection between rapid authentication and strong authentication.

In some examples, the inward-facing camera 236 and/or the inward-facing camera 238 may be an eye-tracking camera to track pupil movements of the user's eye for augmented reality (AR) or virtual reality (VR) content presentation purposes and be used to capture iris image(s) too. In other examples, the inward-facing camera 236 and/or the inward-facing camera 238 may be dedicated iris scanning cameras. In yet other examples, the inward-facing camera 236 and/or the inward-facing camera 238 may be infrared cameras enabling iris recognition even in the dark.

In some examples, eye-tracking feature of augmented reality (AR) or virtual reality (VR) near-eye display devices may be used to authenticate a user too. For example, the user may know or be instructed through visual instructions displayed on the display 210 (or via audio cue) to move their pupils according to a predetermined pattern (e.g., up, left, down, right, or any other combination). While the pupil movement combinations may not provide as strong authentication as iris scan or some of the other techniques discussed herein, they may provide a rapid form of authentication and may be used in combination with another rapid authentication technique to provide strong(er) authentication.

In some examples, the inward-facing camera 236, the inward-facing camera 238, and/or a separate camera may be used to scan a retina of the user. Biometric information may be identified in a captured image of the retina and used to authenticate the user. In an example implementation, one or more of the illuminators may be used to provide backlight during the scan.

Any images (e.g., iris or retina) or sensor captured information, as well as, authentication results may or may not be stored at the near-eye display device 102 and/or any other external system (e.g., an authentication server, a content server, etc.) based on user preference. For personal information protection and privacy purposes, a default setting may be not storing the information, which may be modified by the user at any point.

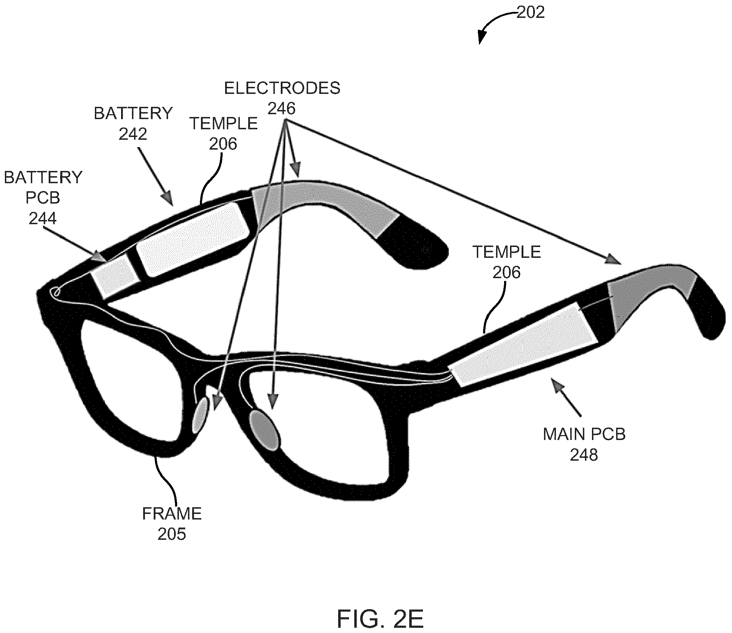

Figure 2E illustrates a perspective view of a near-eye display device that may be used to authenticate a user through cardio-electrical signal detection, according to an example. As with the examples above, the near-eye display device 202 may include some or all of the components of the near-eye display device 102 in Figure 1 for performing functions associated with presenting content to a user, for example augmented reality (AR), virtual reality (VR), and/or other content. In a further example implementation of the authentication functionality, electrodes 246 on the frame 205 and/or on the temples 206 may be used to capture electrocardiogram (ECG) signals of the user. The electrodes 246 may also be positioned in other location, where user finger touches, such as top, bottom, and/or side of the temple 206. A local or remote controller (not shown) may then identify biometric information from the captured electrocardiogram (ECG) signals and use the biometric information to authenticate the user. Electronic components for capturing the electrocardiogram (ECG) signals through the electrodes 246 may be on a main printed circuit board (PCB) 248. A battery 242 may be used to provide power to the various electronic components. Power conditioning and distribution may be accomplished through a number of components and circuits on a battery printed circuit board (PCB) 244.

In some examples, the electrodes (at least two) 246 may be placed at locations on the near-eye display device, where contact with the body of the user is assured. For example, two high sensitivity sensors may be placed on inside surfaces of nose pads to be in contact with a nose of the user. In addition or alternatively, two other high sensitivity sensors may be placed on the inside surfaces of the temples 206 to be in contact with a head of the user. In some examples, both sets of sensors (electrodes) or even more may be used for reliable signal detection. ECG signals are typically characterized by the PR, QRS, QT interval, ST-segment, and heart rate (HR) parameters. This multitude of parameters may allow a unique signature for each user to be authenticated.

In some examples, capture of electrocardiogram (ECG) signals before and after a physical activity (e.g., taking four quick successive breaths) may provide a more reliable authentication source as the difference between the identified biometric information before and after the physical activity may make the signature of each user even more unique. Display 210 (and/or audio cue) may be used to provide instructions to the user such as telling them to perform the physical activity.

Any data (e.g., cardio-electrical signals) or other sensor captured information, as well as, authentication results may or may not be stored at the near-eye display device 102 and/or any other external system (e.g., an authentication server, a content server, etc.) based on user preference. For personal information protection and privacy purposes, a default setting may be not storing the information, which may be modified by the user at any point.

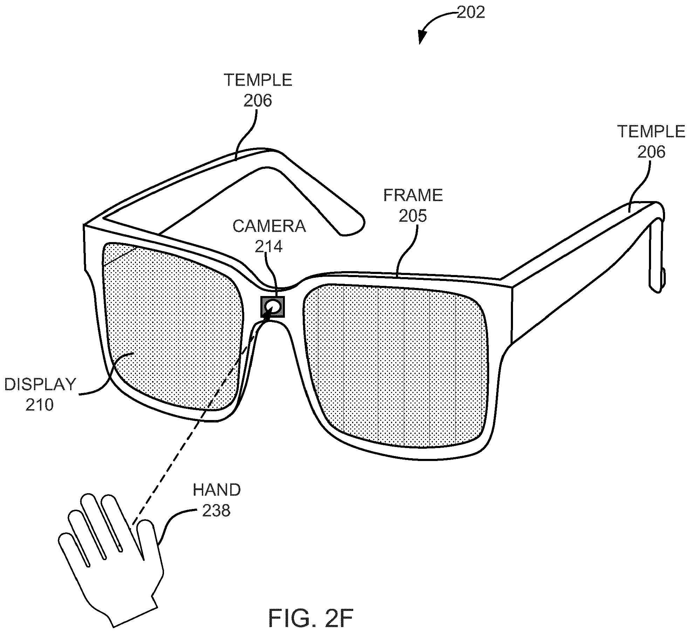

Figure 2F illustrates a perspective view of a near-eye display device that may be used to authenticate a user through palmprint detection, according to an example. As with the examples above, the near-eye display device 202 may include some or all of the components of the near-eye display device 102 in Figure 1 for performing functions associated with presenting content to a user, for example augmented reality (AR), virtual reality (VR), and/or other content. In a further example implementation of the authentication functionality, the outward-facing camera 214 on the frame 205 may be used to capture a palmprint on a hand 238 of the user. A local or remote controller (not shown) may then compare the captured palmprint to a stored palmprint of the user and authenticate the user if the palmprints match. Alternatively, the controller may identify biometric information from the captured image of the palmprint and compare to stored biometric information associated with the user.

Display 210 (and/or audio cue) may be used to provide instructions to the user such as telling them to place their hand 238 in front of the camera 214 with their palm facing the camera. If the palmprint is not successfully detected, a repeat request may also be displayed to the user.

Any images (e.g., palmprint) or sensor captured information, as well as, authentication results may or may not be stored at the near-eye display device 102 and/or any other external system (e.g., an authentication server, a content server, etc.) based on user preference. For personal information protection and privacy purposes, a default setting may be not storing the information, which may be modified by the user at any point.

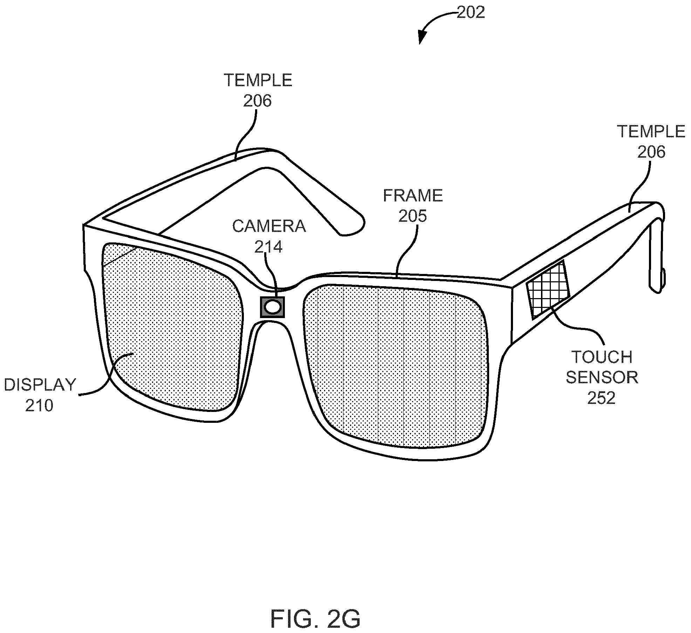

Figure 2G illustrates a perspective view of a near-eye display device that may be used to authenticate a user through passcode entry, according to an example. As with the examples above, the near-eye display device 202 may include some or all of the components of the near-eye display device 102 in Figure 1 for performing functions associated with presenting content to a user, for example augmented reality (AR), virtual reality (VR), and/or other content. In a further example implementation of the authentication functionality, a touch sensor on an outside surface of one of the temples 206 may be used to capture a passcode entry by the user. A local or remote controller (not shown) may then compare the received passcode entry to a stored passcode the user and authenticate the user if the passcodes match.

Due to limited area availability on the near-eye display device 202 (specifically on frame or temple surfaces), the touch sensor 252 may be designed to detect encoded entries as opposed to conventional keypads. In some examples, different finger touches may be used to encode any number of alphanumeric characters. For example, a fingertip touch, a finger flat touch, and a finger swipe may be used in parallel (e.g., two or more finger touch areas on the touch sensor) or in sequence to encode numbers and/or letters. A three-finger touch area configuration using the three touch actions mentioned above (without gaps or no touch options) may provide 27 different entry configurations. A two-finger touch area configuration with the same three touch actions may provide 8 different entry configurations.

In some examples, display 210 (and/or audio cue) may be used to provide instructions to the user such as telling them to touch their entry(ies) through the touch sensor 252, The display 210 may also display (as a reminder) different touch types and or a virtual keypad showing the user which touch action (finger touch entry) or combination corresponds to which alphanumeric character.

Any data (e.g., finger touch entries or passcodes) or other sensor captured information, as well as, authentication results may or may not be stored at the near-eye display device 102 and/or any other external system (e.g., an authentication server, a content server, etc.) based on user preference. For personal information protection and privacy purposes, a default setting may be not storing the information, which may be modified by the user at any point.

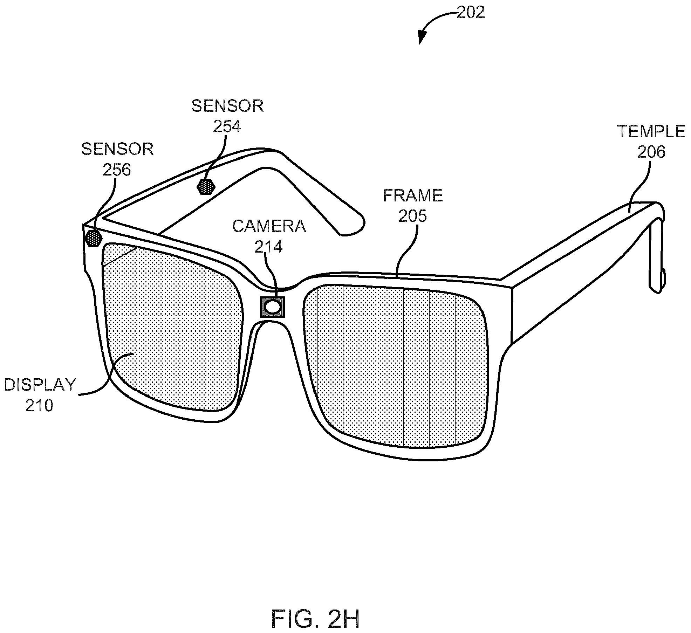

Figure 2H illustrates a perspective view of a near-eye display device with one or more sensors to detect continuous wearing of the near-eye display device, according to an example. Authentication of a user with the near-eye display device 202 may in some cases take the form of unlocking the near-eye display device for any operation (e.g., content viewing, communication sessions, data exchange sessions, etc.) and may be performed when the device is worn or activated. In other cases, the authentication may be for different activities such as those mentioned above and may need to be performed each time the activity begins. To provide ease of use to the user, in some examples, sensor 254 and/or sensor 256 (or other sensors) may be used to confirm that the user has worn the near-eye display device 202 even during a period of inactivity or when switching from one activity to another. Upon confirmation that the user has not taken the near-eye display device 202 off (in other words, it is still the same user), a controller of the near-eye display device 202 may renew the authentication of the user automatically without having the user go through any of the authentication techniques discussed herein.

Accordingly, the authentication may be based on biometric information as discussed herein or based on a user action (i.e., continuous wearing of the near-eye display device). In some examples, the continued authentication (or reauthentication) may be following a brief removal of the near-eye display device. If the near-eye display device is removed from the head of the user for a sufficiently short time period to ensure the near-eye display device is not worn by another user (e.g., 1-3 seconds), the controller may assume the device is still worn by the same user and allow continued authentication.

In one illustrative example, the user may authenticate themselves through fingerprint detection when beginning to play an access-restricted online game session. Subsequently, and without taking the near-eye display device off, the user may leave the game session and join a video conference call. Even though the authentication techniques for the two activities may be different (e.g., passcode entry for the video conference call), the near-eye display device 202 may automatically authenticate the user for the video conference call based on the determination that the user continued to wear the near-eye display device between the two activities. The sensors 254 and 256 may be touch sensors, motion sensors, light sensors, or comparable sensors to detect a removal of the near-eye display device from the user's head. Other access-restricted activities, for which a user may be authenticated, may include, but are not limited to, online calls (audio, video), messaging (text or media sharing), posting to a social or professional network, personal dashboard access (e.g., calendar events), or mobile payments.

In some examples, more than one authentication technique (and associated hardware) may be available on the near-eye display device 202. In such situations, more than one technique may be used in combination for strong(er) authentication. Alternatively, one technique may be suggested to the user over another technique based on particular detected conditions. For example, a noise level of the environment may be determined to be above a certain threshold, and fingerprint detection or iris detection may be suggested over voice recognition. In another example, the user may be wearing gloves or their hands (fingers) may be dirty. Thus, voice recognition or iris detection may be suggested (or made available) over fingerprint detection or palmprint detection. In other examples, additional authentication techniques may be suggested or made available upon failure to authenticate the user through one authentication technique.

In some examples, two or more authentication techniques may be combined for strong(er) authentication. For example, voice recognition may be sufficient for watching a streaming video, while stronger authentication may be required for accessing certain data and fingerprint detection may be used for that activity. Alternatively, a strong authentication technique may be used once and cover all activities including those requiring weaker authentication.

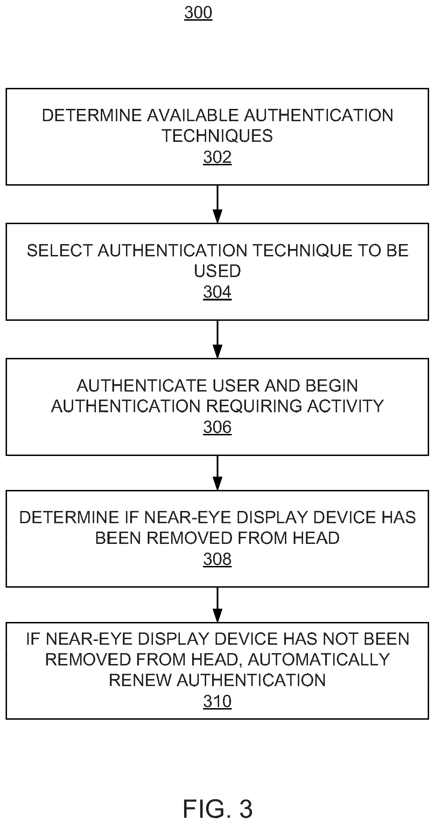

Figure 3 illustrates a flowchart of a method 300 for authenticating a user of a near-eye display device for secure data exchange or communication via the near-eye display device, according to an example. The method 300 is provided by way of example, as there may be a variety of ways to carry out the method described herein. Although the method 300 is primarily described as being performed by various components of Figure 2A through 2H, the method 300 may be executed or otherwise performed by one or more processing components of another system or a combination of systems. Each block shown in Figure 3 may further represent one or more processes, methods, or subroutines, and one or more of the blocks may include machine readable instructions stored on a non-transitory computer readable medium and executed by a processor or other type of processing circuit to perform one or more operations described herein.

At block 302, a remote or local controller for the near-eye display device 202 may determine which authentication techniques (and associated hardware) are available on the near-eye display device 202. At block 304, an authentication technique may be selected if more than one is available. The selection may be based on a requirement by a particular activity (e.g., watching a video stream, participating in an online video conference, accessing a networked data store, participating in an online game session, accessing bank records, etc.). The selection may also be based on certain conditions such as noise level of the environment, lighting level of the environment, clear access to biometric characteristic of the user (e.g., iris, fingerprint, palmprint, etc.).

At block 306, the user characteristic according to the selected authentication technique may be captured and authentication performed. If the user is authenticated, the authentication requiring activity may be started. At block 308, a determination may be made (based on sensor input) whether the near-eye display device has been removed from the head of the user during a period of inactivity or between two distinct authentication requiring activities. If the determination is that the near-eye display device has not been removed, the user's authentication may be automatically renewed at block 310 and the user allowed to participate in the next authentication requiring activity.

Example user authentication techniques may be implemented, in addition to the near-eye display devices discussed herein, other forms of head-mount devices such as goggles, headsets, and other types of wearable devices such as a smart watch, a smart armband, smart glasses, non-display wearables (e.g., game controller), and comparable ones.

According to examples, a method of making a near-eye display device capable of authenticating a user is described herein. A system of making the near-eye display device capable of authenticating is also described herein. A non-transitory computer-readable storage medium may have an executable stored thereon, which when executed instructs a processor to perform the methods described herein.

It should be noted that the functionality described herein may be subject to one or more privacy policies, described below, enforced by the near-eye display device 102 or a system that manages operations of the near-eye display device 102 via communicative coupling that may bar use of images or other personal information for concept detection, recommendation, generation, and analysis.

In particular examples, one or more objects (e.g., captured user characteristics, content, or other types of objects) of a computing system may be associated with one or more privacy settings. The one or more objects may be stored on or otherwise associated with any suitable computing system or application, such as, for example, a system, client devices (e.g., near-eye display device 102), host systems, an external system, a social-networking application, a messaging application, a photo-sharing application, or any other suitable computing system or application. Although the examples discussed herein are in the context of an online social network, these privacy settings may be applied to any other suitable computing system. Privacy settings (or "access settings") for an object may be stored in any suitable manner, such as, for example, in association with the object, in an index on an authorization server, in another suitable manner, or any suitable combination thereof. A privacy setting for an object may specify how the object (or particular information associated with the object) can be accessed, stored, or otherwise used (e.g., viewed, shared, modified, copied, executed, surfaced, or identified) within the online social network. When privacy settings for an object allow a particular user or other entity to access that object, the object may be described as being "visible" with respect to that user or other entity. As an example and not by way of limitation, a user of the online social network may specify privacy settings for a user-profile page that identify a set of users that may access work-experience information on the user-profile page, thus excluding other users from accessing that information.

In particular examples, privacy settings for an object may specify a "blocked list" of users or other entities that should not be allowed to access certain information associated with the object. In particular examples, the blocked list may include third-party entities. The blocked list may specify one or more users or entities for which an object is not visible. As an example and not by way of limitation, a user may specify a set of users or entities who may not access user characteristics for authentication purposes (e.g., fingerprint, palmprint, iris image, ECG signals, and the like), thus excluding those users or entities from accessing the user characteristics (while also possibly allowing certain users or entities not within the specified set of users or entities to access the user characteristics). In particular examples, privacy settings may be associated with particular social-graph elements. Privacy settings of a social-graph element, such as a node or an edge, may specify how the social-graph element, information associated with the social-graph element, or objects associated with the social-graph element can be accessed using the online social network. As an example and not by way of limitation, a particular concept node corresponding to a particular user characteristic may have a privacy setting specifying that the user characteristic may be accessed only by users listed in a specific allowed users list. In particular examples, privacy settings may allow users to opt in to or opt out of having their content, information, or actions stored/logged by the system or shared with other systems (e.g., an external system). Although this disclosure describes using particular privacy settings in a particular manner, this disclosure contemplates using any suitable privacy settings in any suitable manner.

In particular examples, the near-eye display device 102 may present a "privacy wizard" (e.g., within a webpage, a module, one or more dialog boxes, or any other suitable interface) to the first user to assist the first user in specifying one or more privacy settings. The privacy wizard may display instructions, suitable privacy-related information, current privacy settings, one or more input fields for accepting one or more inputs from the first user specifying a change or confirmation of privacy settings, or any suitable combination thereof. In particular examples, the near-eye display device 102 may offer a "dashboard" functionality to the first user that may display, to the first user, current privacy settings of the first user. The dashboard functionality may be displayed to the first user at any appropriate time (e.g., following an input from the first user summoning the dashboard functionality, following the occurrence of a particular event or trigger action). The dashboard functionality may allow the first user to modify one or more of the first user's current privacy settings at any time, in any suitable manner (e.g., redirecting the first user to the privacy wizard).

Privacy settings associated with an object may specify any suitable granularity of permitted access or denial of access. As an example and not by way of limitation, access or denial of access may be specified for particular users (e.g., only me, my roommates, my boss), users within a particular degree-of-separation (e.g., friends, friends-of-friends), user groups (e.g., the gaming club, my family), user networks (e.g., employees of particular employers, students or alumni of particular university), all users ("public"), no users ("private"), users of third-party systems, particular applications (e.g., third-party applications, external websites), other suitable entities, or any suitable combination thereof. Although this disclosure describes particular granularities of permitted access or denial of access, this disclosure contemplates any suitable granularities of permitted access or denial of access.

In particular examples, different objects of the same type associated with a user may have different privacy settings. Different types of objects associated with a user may have different types of privacy settings. As an example and not by way of limitation, a first user may specify that the first user's voice is public, but any images captured for fingerprint, palmprint, or iris scan by the near-eye display device 102 are accessible only to the first user and specified entities on the online social network. As another example and not by way of limitation, a user may specify different privacy settings for different types of entities, such as individual users, friends-of-friends, followers, user groups, or corporate entities. In particular examples, different privacy settings may be provided for different user/entity groups or user/entity demographics. As an example and not by way of limitation, a first user may specify that other users within his/her family or work group may have access to their authentication information, but that other users may not.

In particular examples, the near-eye display device 102 may provide one or more default privacy settings for each object of a particular object-type. A privacy setting for an object that is set to a default may be changed by a user associated with that object. As an example and not by way of limitation, captured voice examples of a first user may have a default privacy setting of being accessible only to friends and coworkers of the first user and, for a characteristic, the first user may change the privacy setting for the characteristic to be restricted for anyone else.

In particular examples, privacy settings may allow a first user to specify (e.g., by opting out, by not opting in) whether the near-eye display device 102 may receive, collect, log, or store particular objects or information associated with the user for any purpose. In particular examples, privacy settings may allow the first user to specify whether particular applications or processes may access, store, or use particular objects or information associated with the user. The privacy settings may allow the first user to opt in or opt out of having objects or information accessed, stored, or used by specific applications or processes. The near-eye display device 102 may access such information in order to provide a particular function or service to the first user, without the near-eye display device 102 having access to that information for any other purposes. Before accessing, storing, or using such objects or information, the near-eye display device 102 may prompt the user to provide privacy settings specifying which applications or processes, if any, may access, store, or use the object or information prior to allowing any such action. As an example and not by way of limitation, a first user may transmit a message to a second user via an application related to the online social network (e.g., a messaging app), and may specify privacy settings that such messages should not be stored by the near-eye display device 102.

In particular examples, a user may specify whether particular types of objects or information associated with the first user may be accessed, stored, or used by the near-eye display device 102. As an example and not by way of limitation, the first user may specify that images sent through the near-eye display device 102 to an authentication service may not be stored by the near-eye display device 102. As another example and not by way of limitation, a first user may specify that messages sent from the first user to a particular second user may not be stored by the near-eye display device 102. As yet another example and not by way of limitation, a first user may specify that all objects sent via a particular application may be saved by the near-eye display device 102.

In particular examples, privacy settings may allow a first user to specify whether particular objects or information associated with the first user may be accessed from client devices or external systems. The privacy settings may allow the first user to opt in or opt out of having objects or information accessed from a particular device (e.g., a user's smart phone), from a particular application (e.g., an authentication app), or from a particular system (e.g., an authentication server). The near-eye display device 102 may provide default privacy settings with respect to each device, system, or application, and/or the first user may be prompted to specify a particular privacy setting for each context. As an example and not by way of limitation, the first user may utilize a location-services feature of the near-eye display device 102 associated with authentication of the user. The first user's default privacy settings may specify that the near-eye display device 102 may use location information provided from one of the client devices of the first user to provide the location-based services, but that the near-eye display device 102 may not store the location information of the first user or provide it to any external system. The first user may then update the privacy settings to allow location information to be used by a third-party application.

In particular examples, privacy settings may allow a user to specify whether current, past, or projected mood, emotion, or sentiment information associated with the user may be determined, and whether particular applications or processes may access, store, or use such information. The privacy settings may allow users to opt in or opt out of having mood, emotion, or sentiment information accessed, stored, or used by specific applications or processes. The near-eye display device 102 may predict or determine a mood, emotion, or sentiment associated with a user based on, for example, inputs provided by the user and interactions with particular objects, in conjunction with ECG-based authentication, for example. In particular examples, the near-eye display device 102 may use a user's previous activities and calculated moods, emotions, or sentiments to determine a present mood, emotion, or sentiment. A user who wishes to enable this functionality may indicate in their privacy settings that they opt in to the near-eye display device 102 receiving the inputs necessary to determine the mood, emotion, or sentiment. As an example and not by way of limitation, the near-eye display device 102 may determine that a default privacy setting is to not receive any information necessary for determining mood, emotion, or sentiment until there is an express indication from a user that the near-eye display device 102 may do so. By contrast, if a user does not opt in to the near-eye display device 102 receiving these inputs (or affirmatively opts out of the near-eye display device 102 receiving these inputs), the near-eye display device 102 may be prevented from receiving, collecting, logging, or storing these inputs or any information associated with these inputs. In particular examples, the near-eye display device 102 may use the predicted mood, emotion, or sentiment to provide recommendations or advertisements to the user. In particular examples, if a user desires to make use of this function for specific purposes or applications, additional privacy settings may be specified by the user to opt in to using the mood, emotion, or sentiment information for the specific purposes or applications. As an example and not by way of limitation, the near-eye display device 102 may use the user's mood, emotion, or sentiment to provide newsfeed items, pages, friends, or advertisements to a user. The user may specify in their privacy settings that the near-eye display device 102 may determine the user's mood, emotion, or sentiment. The user may then be asked to provide additional privacy settings to indicate the purposes for which the user's mood, emotion, or sentiment may be used. The user may indicate that the near-eye display device 102 may use his or her mood, emotion, or sentiment to provide newsfeed content and recommend pages, but not for recommending friends or advertisements. The near-eye display device 102 may then only provide newsfeed content or pages based on user mood, emotion, or sentiment, and may not use that information for any other purpose, even if not expressly prohibited by the privacy settings.

In particular examples, privacy settings may allow a user to engage in the ephemeral sharing of objects on the online social network. Ephemeral sharing refers to the sharing of objects (e.g., posts, photos) or information for a finite period of time. Access or denial of access to the objects or information may be specified by time or date. As an example and not by way of limitation, a user may specify that a particular image, video, or similar information uploaded by the user through the near-eye display device 102 is visible to the user's friends for the next week, after which time the image may no longer be accessible to other users.

In particular examples, for particular objects or information having privacy settings specifying that they are ephemeral, the near-eye display device 102 may be restricted in its access, storage, or use of the objects or information. The near-eye display device 102 may temporarily access, store, or use these particular objects or information in order to facilitate particular actions of a user associated with the objects or information, and may subsequently delete the objects or information, as specified by the respective privacy settings. As an example and not by way of limitation, a first user may transmit a message to a second user, and the near-eye display device 102 may temporarily store the message in a content data store until the second user has viewed or downloaded the message, at which point the near-eye display device 102 may delete the message from the data store. As another example and not by way of limitation, continuing with the prior example, the message may be stored for a specified period of time (e.g., 2 weeks), after which point the near-eye display device 102 may delete the message from the content data store.

In particular examples, privacy settings may allow a user to specify one or more geographic locations from which objects can be accessed. Access or denial of access to the objects may depend on the geographic location of a user who is attempting to access the objects. As an example and not by way of limitation, a user may share an object and specify that only users or entities in the same city may access or view the object. As another example and not by way of limitation, a first user may share an object and specify that the object is visible to second users or entities only while the first user is in a particular location. If the first user leaves the particular location, the object may no longer be visible to the second users or entities. As another example and not by way of limitation, a first user may specify that an object is visible only to second users or entities within a threshold distance from the first user. If the first user subsequently changes location, the original second or entities users with access to the object may lose access, while a new group of second users or entities may gain access as they come within the threshold distance of the first user.

In particular examples, the near-eye display device 102 may have functionalities that may use, as inputs, personal or biometric information of a user for user-authentication or experience-personalization purposes. A user may opt to make use of these functionalities to enhance their experience on the online social network. As an example and not by way of limitation, a user may provide personal or biometric information to the near-eye display device 102. The user's privacy settings may specify that such information may be used only for particular processes, such as authentication, and further specify that such information may not be shared with any external system or used for other processes or applications associated with the near-eye display device 102. As another example and not by way of limitation, the near-eye display device 102 may provide a functionality for a user to provide voice-print recordings to the online social network. As an example and not by way of limitation, if a user wishes to utilize this function of the online social network, the user may provide a voice recording of his or her own voice to provide a status update on the online social network. The recording of the voice-input may be compared to a voice print of the user to determine what words were spoken by the user. The user's privacy setting may specify that such voice recording may be used only for voice-input purposes (e.g., to authenticate the user, to send voice messages, to improve voice recognition in order to use voice-operated features of the online social network), and further specify that such voice recording may not be shared with any external system or used by other processes or applications associated with the near-eye display device 102. As another example and not by way of limitation, the near-eye display device 102 may provide a functionality for a user to provide a reference image (e.g., a facial profile, a retinal scan) to the online social network. The online social network may compare the reference image against a later-received image input (e.g., to authenticate the user, to tag the user in photos). The user's privacy setting may specify that such voice recording may be used only for a limited purpose (e.g., authentication, tagging the user in photos), and further specify that such voice recording may not be shared with any external system or used by other processes or applications associated with the near-eye display device 102.

In particular examples, changes to privacy settings may take effect retroactively, affecting the visibility of objects and content shared prior to the change. As an example and not by way of limitation, a first user may share a first image and specify that the first image is to be public to all other users. At a later time, the first user may specify that any images shared by the first user should be made visible only to a first user group. The near-eye display device 102 may determine that this privacy setting also applies to the first image and make the first image visible only to the first user group. In particular examples, the change in privacy settings may take effect only going forward. Continuing the example above, if the first user changes privacy settings and then shares a second image, the second image may be visible only to the first user group, but the first image may remain visible to all users. In particular examples, in response to a user action to change a privacy setting, the near-eye display device 102 may further prompt the user to indicate whether the user wants to apply the changes to the privacy setting retroactively. In particular examples, a user change to privacy settings may be a one-off change specific to one object. In particular examples, a user change to privacy may be a global change for all objects associated with the user.

In particular examples, the near-eye display device 102 may determine that a first user may want to change one or more privacy settings in response to a trigger action associated with the first user. The trigger action may be any suitable action on the online social network. As an example and not by way of limitation, a trigger action may be a change in the relationship between a first and second user of the online social network (e.g., "un-friending" a user, changing the relationship status between the users). In particular examples, upon determining that a trigger action has occurred, the near-eye display device 102 may prompt the first user to change the privacy settings regarding the visibility of objects associated with the first user. The prompt may redirect the first user to a workflow process for editing privacy settings with respect to one or more entities associated with the trigger action. The privacy settings associated with the first user may be changed only in response to an explicit input from the first user and may not be changed without the approval of the first user. As an example and not by way of limitation, the workflow process may include providing the first user with the current privacy settings with respect to the second user or to a group of users (e.g., un-tagging the first user or second user from particular objects, changing the visibility of particular objects with respect to the second user or group of users), and receiving an indication from the first user to change the privacy settings based on any of the methods described herein, or to keep the existing privacy settings.

In particular examples, a user may need to provide verification of a privacy setting before allowing the user to perform particular actions on the online social network, or to provide verification before changing a particular privacy setting. When performing particular actions or changing a particular privacy setting, a prompt may be presented to the user to remind the user of his or her current privacy settings and to ask the user to verify the privacy settings with respect to the particular action. Furthermore, a user may need to provide confirmation, double-confirmation, authentication, or other suitable types of verification before proceeding with the particular action, and the action may not be complete until such verification is provided. As an example and not by way of limitation, a user's default privacy settings may indicate that a person's relationship status is visible to all users (i.e., "public"). However, if the user changes his or her relationship status, the near-eye display device 102 may determine that such action may be sensitive and may prompt the user to confirm that his or her relationship status should remain public before proceeding. As another example and not by way of limitation, a user's privacy settings may specify that the user's posts are visible only to friends of the user. However, if the user changes the privacy setting for his or her posts to being public, the near-eye display device 102 may prompt the user with a reminder of the user's current privacy settings of posts being visible only to friends, and a warning that this change will make all of the user's past posts visible to the public. The user may then be required to provide a second verification, input authentication credentials, or provide other types of verification before proceeding with the change in privacy settings. In particular examples, a user may need to provide verification of a privacy setting on a periodic basis. A prompt or reminder may be periodically sent to the user based either on time elapsed or a number of user actions. As an example and not by way of limitation, the near-eye display device 102 may send a reminder to the user to confirm his or her privacy settings every six months or after every ten photo posts. In particular examples, privacy settings may also allow users to control access to the objects or information on a per-request basis. As an example and not by way of limitation, the near-eye display device 102 may notify the user whenever an external system attempts to access information associated with the user, and require the user to provide verification that access should be allowed before proceeding.

In the foregoing description, various inventive examples are described, including devices, systems, methods, and the like. For the purposes of explanation, specific details are set forth in order to provide a thorough understanding of examples of the disclosure. However, it will be apparent that various examples may be practiced without these specific details. For example, devices, systems, structures, assemblies, methods, and other components may be shown as components in block diagram form in order not to obscure the examples in unnecessary detail. In other instances, well-known devices, processes, systems, structures, and techniques may be shown without necessary detail in order to avoid obscuring the examples.

The figures and description are not intended to be restrictive. The terms and expressions that have been employed in this disclosure are used as terms of description and not of limitation, and there is no intention in the use of such terms and expressions of excluding any equivalents of the features shown and described or portions thereof. The word "example" is used herein to mean "serving as an example, instance, or illustration." Any embodiment or design described herein as "example' is not necessarily to be construed as preferred or advantageous over other embodiments or designs.

Although the methods and systems as described herein may be directed mainly to digital content, such as videos or interactive media, it should be appreciated that the methods and systems as described herein may be used for other types of content or scenarios as well. Other applications or uses of the methods and systems as described herein may also include social networking, marketing, content-based recommendation engines, and/or other types of knowledge or data-driven systems.

## Claims

1. A near-eye display device, comprising:
a display element to present a digital content to a user;
at least one sensor to receive biometric information associated with the user; and
a controller communicatively coupled to the display element and the at least one sensor, the controller configured to authenticate the user for an access-restricted activity based at least in part on an evaluation of the received biometric information or a user action.

2. The near-eye display device of claim 1, wherein the access-restricted activity comprises an engagement with multimedia content or restricted data.

3. The near-eye display device of claim 1 or 2, further comprising:
at least one additional sensor to detect whether the near-eye display device is continuously worn by the user between a first access-restricted activity and a second access-restricted activity, wherein the user action is continuous wearing of the near-eye display device by the user.

4. The near-eye display device of claim 3, wherein the controller is further configured to:
renew the authentication for the second access-restricted activity in the event the near-eye display device is continuously worn by the user or reworn by the user within a predetermined time period.

5. The near-eye display device of any preceding claim, further comprising:
at least one additional sensor to detect one of an environmental condition or a user condition, wherein the controller is further configured to:
determine, based on an input from the at least one additional sensor, that the environmental condition or the user condition is incompatible with a first authentication technique; and
make available a second authentication technique.

6. The near-eye display device of any preceding claim, wherein the biometric information associated with the user comprises at least one of a biological biometric information or behavioral biometric information.

7. The near-eye display device of claim 6, wherein
the biological biometric information comprises data associated with a face, a fingerprint, a palmprint, an iris, a retina, or an electrocardiogram (ECG) signal of the user; and
the near-eye display device further comprises a camera to capture an image of a finger of the user or a capacitive sensor to scan the finger of the user.

8. The near-eye display device of claim 6 or 7, wherein the behavioral biometric information comprises data associated with a movement, a gesture, a voice, or a gait of the user;
preferably further comprising at least one of:
a motion detector to detect the gait of the user;
a touchpad integrated with the near-eye display device to receive a passcode from the user;
a microphone to capture the voice of the user;
a camera to capture a sequence of finger gestures; or
a muscle electrical signal detector to detect muscle electrical signals from a wrist of the user and to determine a sequence of finger gestures based on the detected muscle electrical signals.

9. A method, comprising:
presenting, through a display element of a near-eye display device, a digital content to a user;
receiving, through at least one sensor of the near-eye display device, biometric information associated with the user; and
authenticating, through a controller of the near-eye display device, the user for an access-restricted activity based at least in part on an evaluation of the received biometric information or a user action.

10. The method of claim 9, wherein presenting the digital content comprises:
enabling an engagement with multimedia content or restricted data.

11. The method of claim 9 or 10, further comprising:
detecting whether the near-eye display device is continuously worn by the user between a first access-restricted activity and a second access-restricted activity, wherein the user action is continuous wearing of the near-eye display device by the user;
preferably further comprising:
renewing the authentication for the second access-restricted activity in the event the near-eye display device is continuously worn by the user or reworn by the user within a predetermined time period.

12. The method of any of claims 9 to 11, further comprising:
detecting an environmental condition or a user condition;
determining that the environmental condition or the user condition is incompatible with a first authentication technique; and
making available a second authentication technique.

13. The method of any of claims 9 to 12, wherein
the biometric information associated with the user comprises at least one of a biological biometric information or behavioral biometric information; and
the behavioral biometric information comprises data associated with a movement, a gesture, a voice, or a gait of the user.

14. A non-transitory computer-readable storage medium having an executable stored thereon, which when executed by the controller of the near-eye display device of any of claims 1 to 8, causes the controller to carry out the method of any of claims 9 to 13.

15. A computer program product comprising instructions which, when executed by the controller of the near-eye display device of any of claims 1 to 8, causes the controller to carry out the method of any of claims 9 to 13.
